# EUROPEAN PATENT SPECIFICATION

(11) **EP 0 684 075 B1**
(45) Date of publication and mention of the grant of the patent: **26.03.2003**
(21) Application number: 95902937.2
(22) Date of filing: 09.12.1994
(51) Int. Cl.: B01J 35/02, B01J 21/06, B01J 23/00, C04B 41/85, B01J 35/00

(54) **MULTI-FUNCTIONAL MATERIAL HAVING PHOTO-CATALYTIC FUNCTION AND PRODUCTION METHOD THEREFOR**
MULTIFUNKTIONELLES MATERIAL MIT PHOTOKATALYTISCHER FUNKTION UND VERFAHREN ZUR DESSEN HERSTELLUNG
SUBSTANCE MULTIFONCTION A EFFET PHOTOCATALYTIQUE ET PROCEDE DE PRODUCTION

(30) Priority: 10.12.1993 JP 31016593; 14.12.1993 JP 31306193; 14.12.1993 JP 31306293; 24.12.1993 JP 34807393; 24.06.1994 JP 14347394; 22.09.1994 JP 25424294; 29.09.1994 JP 27191294; 30.09.1994 JP 27416594; 11.10.1994 JP 28238294; 24.10.1994 JP 29776094; 04.11.1994 JP 27149994; 04.11.1994 JP 30717394; 09.11.1994 JP 31139894; 11.11.1994 JP 31396794
(43) Date of publication of application: 29.11.1995
(73) Proprietor: Toto Ltd., Kitakyushu-shi, Fukuoka 802 (JP)
(72) Inventor: WATANABE, Toshiya, Kitakyushu-shi, Fukuoka-ken 802 (JP); KOJIMA, Eiichi, Kitakyushu-shi, Fukuoka-ken 802 (JP); NORIMOTO, Keiichiro, Kitakyushu-shi, Fukuoka-ken 802 (JP); KIMURA, Tamon, Kitakyushu-shi, Fukuoka-ken 802 (JP); MACHIDA, Mitsuyosi, Kitakyushu-shi, Fukuoka-ken 802 (JP); HAYAKAWA, Makoto, Kitakyushu-shi, Fukuoka-ken 802 (JP); KITAMURA, Atsushi, Kitakyushu-shi, Fukuoka-ken 802 (JP); CHIKUNI, Makoto, Kitakyushu-shi, Fukuoka-ken 802 (JP); SAEKI, Yoshimitsu, Kitakyushu-shi, Fukuoka-ken 802 (JP); KUGA, Tatsuhiko, Kitakyushu-shi, Fukuoka-ken 802 (JP); NAKAJIMA, Yasushi, Kitakyushu-shi, Fukuoka-ken 802 (JP)
(74) Representative: Marsden, John Christopher
(86) International application number: JP9402077
(87) International publication number: WO95015816

(56) References cited:
- EP-A- 0 572 914
- EP-A- 0 581 216
- JP-A- 1 288 321
- JP-A- 5 059 562
- JP-A- 6 278 241
- JP-A- 6 293 519
- DATABASE WPI Section Ch, Week 9344 Derwent Publications Ltd., London, GB; Class D22, AN 93-347753 XP002054708 & JP 05 253 544 A (TOTO LTD) , 5 October 1993

## Description

### TECHNICAL FIELD:

The present invention relates to a multi-functional material capable of performing various functions including a deodorizing function, an antibacterial function, a bactericidal function, and a stain-resistant function, and a method of manufacturing such a multi-functional material.

### BACKGROUND ART:

TiO₂, V₂O₅, ZnO, WO₃, etc. have heretofore been known as substances which, when irradiated by ultraviolet radiation, cause oxygen molecules to be adsorbed to or desorbed from an organic compound such as of a smelly constituent for promoting decomposition (oxidation) of the organic compound. Since particles of TiO₂ whose crystallized form is anatase, in particular, are highly effective for use as a photocatalyst, it has been proposed to form a photocatalytic layer of TiO₂ particles on the surface of walls, tiles, glass (mirror), circulatory filter units, or sanitary ware.

Known processes of depositing such a photocatalytic layer of TiO₂ particles directly on the surface of a base of plastic, ceramic, or resin include the CVD process, the sputtering process, and the electron beam evaporation process.

However, the CVD process, the sputtering process, and the electron beam evaporation process require large-scale equipment, and result in a high manufacturing cost due to a poor yield.

Another known process of forming a photocatalytic layer is an alkoxide process disclosed in Japanese laid-open utility model publication No. 5-7394. According to the disclosed process, a photocatalytic layer is formed by coating a base of glass with a titanium alkoxide, drying the coated titanium alkoxide, and thereafter firing the titanium alkoxide at 100°C. An organic material in water is decomposed when an ultraviolet radiation is applied to the photocatalytic layer.

The alkoxide process is excellent in that it can form a thin film at a relatively low temperature, and is effective where a substance such as Pyrex glass or quartz glass which is not softened at temperatures up to about 500°C is used as the material of the base. If a substance such as soda glass having a low melting point is used as the material of a base, then the base is softened already at a temperature at which a thin film is formed, and a formed thin photocatalytic film is embedded in the base, with the result that no light will reach the photocatalytic layer, which will fail to perform photocatalytic functions.
JP 05 253544A describes a plate - shaped object having photocatalytic particles adhered to a binder layer on the plate.The use of a silica binder layer and a soda glass base is not described. EP 0581216 describes the formation of a titanium oxide coating film on a support, without the use of an intermediate binder layer.

Therefore, it is an object of the present invention to provide a multi-functional material in which a photocatalytic layer is exposed from a base to exhibit a sufficient photocatalytic effect, and the base well retains the photocatalytic layer.

Another object of the present invention is to form a photocatalytic layer which is less peelable on a relatively dense base of glass, tile, metal, or plastic.

Still another object of the present invention is to form a photocatalytic layer on a base of relatively low melting point, e.g., a base of soda glass which is relatively inexpensive and can easily be processed.

### DISCLOSURE OF THE INVENTION:

The invention thus provides a multi-functional material with a photocatalytic function, comprising a base and a photocatalytic layer having a photocatalytic function and disposed on a surface of said base through a binder layer interposed therebetween, said photocatalytic layer including a surface layer exposed outwardly and a lower layer embedded in said binder layer, said base being made of soda glass and said binder layer being of silica. The photocatalytic particles may be titanium oxide particles, which may carry particles of a metal such as copper or silver.

The invention also includes a method of manufacturing a multi-functional material according to the invention, which comprises forming the silica binder layer on the surface of the soda glass base and then forming the photocatalytic layer with the lower layer thereof embedded in the binder layer. The titanium oxide photocatalytic layer may be formed by hydrolysing a titanium alkoxide to titanium hydroxide, and dehydrating and condensing the latter. The material produced is fired at 400-500°C.

As indicated above, if a thin photocatalytic film is formed on the surface of a base having a low melting point, then the base is softened already at a temperature at which the thin photocatalytic film is formed, and the formed thin photocatalytic film is embedded in the base, with the result that no light will reach the photocatalytic layer, which will fail to perform photocatalytic functions.

To avoid the above shortcoming, photocatalytic particles are fixed to a base through a layer such as an SiO₂ coat which has a melting point higher than the base. Specific examples will be described below.

### Inventive Example 1

Before a titanium oxide was coated on a sheet of soda glass, the surface of the sheet of soda glass was coated with silica.

The surface of a square sheet of soda glass with each side 10 cm long was coated with silica as follows: First, tetraethoxysilane, 36 % hydrochloric acid, pure water, and ethanol were mixed at a weight ratio of 6 : 2 : 6 : 86. Since heat was generated when they were mixed together, the mixture was left to stand for one hour. Then, the mixture was coated on the sheet of soda glass by flow coating.

Then, a coating solution was prepared by mixing titanate tetraethoxide and ethanol at a weight ratio of 1 : 9 and adding 10 weight % of 36 % hydrochloric acid with respect to the titanate tetraethoxide to the mixture. The amount of 36 % hydrochloric acid to be added should be in the ranging of from 1 weight % to 30 weight %, preferably from 5 weight % to 20 weight %, with respect to the titanate tetraethoxide. The addition of the appropriate amount of hydrochloric acid is effective to prevent the assembly from being cracked when it is subsequently dried and fired. If the added amount of hydrochloric acid were too small, then the assembly is not sufficiently be prevented from being cracked, and if the added amount of hydrochloric acid were too large, then since the amount of water contained in the hydrochloric acid reagent would be increased, the hydrolysis of the titanate tetraethoxide would be accelerated, making it difficult to produce a uniform coating.

Then, the coating solution was coated on the surface of the soda glass base in dry air by flow coating. The term "dry air" used herein does not denote air which does not contain water at all, but denotes air which contains little water compared with ordinary air. If the coating solution were coated on the surface of the soda glass base in ordinary air, but not in dry air, then the hydrolysis of the titanate tetraethoxide would be accelerated by water in the air, and the amount of the solution coated in one coating cycle would be so large that the assembly would tend to be cracked when it is subsequently dried and fired. The accelerated hydrolysis would make it hard to control the amount of the solution coated. To prevent cracking, the amount of titanium oxide carried in one cycle should preferably be 100 µg/cm² or less. In this example, the amount of carried titanium oxide was 45 µg/cm².

Thereafter, a film of titanium oxide was formed by drying the assembly in dry air for 1 ∼ 10 minutes. The titanium oxide was formed in the process so far according to the following principles: A starting material is titanate tetraethoxide which is one type of titanium alkoxide. (Use of other titanium alkoxide produces the same result in principle.) The titanate tetraethoxide causes a hydrolytic reaction with water in dry air upon flow coating, generating titanium hydroxide. Furthermore, when dried, a dehydrating and condensing reaction occurs, producing amorphous titanium oxide on the base. Particles of titanium oxide produced at this time have diameters ranging from about 3 to 150 nm, and are highly pure. Therefore, the titanium oxide thus produced can be sintered at a temperature lower than titanium oxides produced by other manufacturing processes.

The composite material thus produced by the above process is fired at a temperature ranging from 400°C to 500°C, producing a multi-functional material. If necessary, the steps from the coating of titanate tetraethoxide to the firing of the composite material is repeated to obtain a thick coating of titanium oxide.

Specimens produced according to the above process were evaluated for deodorizing, wear-resistant, and antibacterial capabilities. The results of the evaluation are given in Table 1 below.

**Table 1**

| Firing temp (°C) | Wear resistance | R₃₀(L) | R₃₀(D) | Antibacterial ability (L) | Antibacterial ability (D) |
|---|---|---|---|---|---|
| 300 | ⊙ | 0 % | 0 % | - | - |
| 400 | ⊙ | 60 % | 0 % | + | - |
| 500 | ⊙ | 60 % | 3 % | + | - |

The deodorizing capability was evaluated by placing a specimen in a cylindrical container having a diameter of 26 cm and a height of 21 cm and in which an initial concentration of methyl mercaptan was adjusted to 2 ppm, and measuring a rate (R₃₀(L)) at which the methyl mercaptan was removed 30 minutes after being irradiated by a 4W BLB fluorescent lamp 8 cm spaced from the specimen and a rate (R₃₀(D)) at which the methyl mercaptan was removed 30 minutes after being shielded from light.

The wear resistance was evaluated by rubbing the specimen with a plastic eraser, and comparing any change in the appearance thereof. Evaluation indications ⊙, ○, Δ, × used were as described below.
- ⊙ :: Not varied after 40 reciprocating rubbing movements against the specimens.
- ○ :: Damage was caused and the photocatalytic layer (TiO₂ layer) was peeled off by 10 - 40 rubbing movements against the specimens.
- Δ :: Damage was caused and the photocatalytic layer (TiO₂ layer) was peeled off by 5 ∼ 10 rubbing movements against the specimens.
- × :: Damage was caused and the photocatalytic layer (TiO₂ layer) was peeled off by 5 rubbing movements or less against the specimens.

The antibacterial capability was tested using escherichia coli, strain: W3110. Specifically, 0.15 ml (1 ∼ 50000 CFU) of the bacterial solution was dropped onto the outermost surface of the multi-functional material which had been sterilized with 70 % ethanol, and a glass sheet (100 × 100 mm) was placed in intimate contact with the outermost surface of the base, thus preparing a specimen. After the specimen was irradiated with light from a white-light lamp with 5200 luxes for 30 minutes, the bacterial solution on the irradiated specimen and the bacterial solution on a specimen kept under a shielded condition were wiped with a sterile gauze, and collected in 10 ml of physiological saline. The survival rates of the bacteria were determined as indications for evaluation. Evaluation indications +++, ++, + 1 used were as described below.
- +++:: Survival rate of escherichia coli: less than 10 %
- ++ :: Survival rate of escherichia coli: 10 % or more and less than 30 %
- + :: Survival rate of escherichia coli: 30 % or more and less than 70 %
- - :: Survival rate of escherichia coli: 70 % or more

At a firing temperature of 300°C, the rubbing test indicated a good result of ⊙, but R₃₀(L) was 0 %. This is considered to be because the amorphous titanium oxide was not crystallized into an anatase structure.

At a firing temperature of 400°C at which an anatase structure can be confirmed by X-rays in a synthesis test, the rubbing test indicated a good result of ⊙, R₃₀(L) increased to 60 %, and the antibacterial capability had a value of +. At a firing temperature of 500°C, the rubbing test indicated a good result of ⊙, and R₃₀(L) increased to 60 %.

When the temperature increased, the base of soda glass was deformed at 550°C, and no multi-functional material was manufactured.

### Inventive Example 2

In order to improve the photocatalytic characteristics of the specimens obtained in Inventive Example 1, metal particles were added. The photocatalyst carries out an oxidizing reaction and a reducing reaction at the same time. If the reducing reaction were not in progress, no electrons would be consumed, and particles would be charged, and the oxidizing reaction would not be in progress either. This appears to be responsible for the fact that R₃₀(L) stopped at 60 % in Inventive Example 1. To avoid this, metal particles may be carried on particles of titanium oxide to release electrons for thereby preventing the particles from being charged.

Metal particles were introduced by the following process: A solution of metallic salt was coated on a photocatalyst by flow coating, and irradiated for one minute by a 20W BLB fluorescent lamp at a distance of 20 cm. The solution of metallic salt comprised an ethanol solution of 1 wt % of copper acetate if copper was to be carried, and a mixture of water and ethanol containing 1 wt % of silver nitrate at 1 : 1 if silver was to be carried. After being irradiated, the assembly was cleaned and dried. The solution containing ethanol was used rather than an aqueous solution of metallic salt because the solution of metallic salt has good wettability with respect to the specimen.

The specimen thus produced was evaluated for deodorizing, wear-resistant, and antibacterial capabilities. The results of the evaluation are given in Table 2. Only the specimen fired at 500°C was used for evaluation.

**Table 2**

| Firing temp (°C) | Wear resistance | R₃₀(L) | R₃₀(D) | Antibacterial ability (L) | Antibacterial ability (D) |
|---|---|---|---|---|---|
| 500 | ⊙ | 98 % | 98 % | +++ | +++ |

The rubbing test indicated a good result of ⊙, R₃₀(L) greatly increased to 98 %, and the antibacterial capability had a value of +++.

### Comparative Example 3

The same specimens as those of Inventive Example 1 except that no silica coating was applied were used. Specifically, a titanium oxide was coated on a square sheet of soda glass with each side 10 cm long. The evaluated results of deodorizing, wear-resistant, and antibacterial capabilities of the specimens are given in Table 3.

**Table 3**

| Firing temp (°C) | Wear resistance | R₃₀(L) | R₃₀(D) | Antibacterial ability (L) | Antibacterial ability (D) |
|---|---|---|---|---|---|
| 300 | ⊙ | 0 % | 0 % | - | - |
| 400 | ⊙ | 0 % | 0 % | - | - |
| 500 | ⊙ | 0 % | 0 % | - | - |

It can be seen from Table 3 that the rubbing test indicated a good result of ⊙ at the temperatures of 300°C, 400°C, 500°C, but R₃₀(L) was 0 % even when the process from the coating of titanate tetraethoxide to the firing of the assembly was repeated 10 times. The antibacterial capability of each specimen had a value of -.

R₃₀(L) was poor at 300°C because the amorphous titanium oxide was not crystallized into an anatase structure.

At 400°C and 500°C, the amorphous titanium oxide was already crystallized into an anatase structure, and the poor value of R₃₀(L) cannot be explained by the amorphous titanium oxide, but appears to be caused by the fact that since the base of soda glass was softened, the film of titanium oxide was embedded therein.

consequently, it is possible to manufacture a multi-functional material which has deodorizing and antibacterial capabilities, of a base having a relatively low melting point by placing a layer of a high melting point between the base and a photocatalytic layer.

## Claims

1. A multi-functional material with a photocatalytic function, comprising a base and a photocatalytic layer having a photocatalytic function and disposed on a surface of said base through a binder layer interposed therebetween, said photocatalytic layer including a surface layer exposed outwardly and a lower layer embedded in said binder layer, said base being made of soda glass and said binder layer being of silica.

2. A material according to claim 1 in which the photocatalytic layer comprises titanium oxide particles.

3. A material according to claim 2 in which the titanium oxide particles additionally carry particles of a metal such as copper or silver.

4. A method of manufacturing a multi-functional material according to claim 1, which comprises forming the silica binder layer on the surface of the soda glass base and then forming the photocatalytic layer with the lower layer thereof embedded in the binder layer.

5. A method according to claim 4 in which a titanium oxide photocatalytic layer is formed by hydrolysing a titanium alkoxide to titanium hydroxide, and dehydrating and condensing the latter.

6. A method according to claim 4 in which the material produced is fired at 400-500°C.

## Patentansprüche

1. Multifunktionelles Material mit einer fotokatalytischen Funktion umfassend eine Basis und eine fotokatalytische Schicht, die eine fotokatalytische Funktion aufweist, und die über eine dazwischenliegende Binderschicht auf eine Fläche der Basis aufgebracht ist, wobei die fotokatalytische Schicht eine Oberflächenschicht, die nach außen hin frei liegt, und eine untere Schicht, die in die Binderschicht eingebettet ist, umfasst, wobei die Basis aus Sodaglas und die Binderschicht aus Silicamaterial besteht.

2. Material nach Anspruch 1, in welchem die fotokatalytische Schicht Titanoxid-Partikel umfasst.

3. Material nach Anspruch 2, in welchem die Titanoxid-Partikel zusätzlich Partikel eines Metalls wie Kupfer oder Silber tragen.

4. Verfahren zur Herstellung eines multifunktionellen Materials nach Anspruch 1, das das Bilden der Silicamaterial-Binderschicht auf der Fläche der Sodaglas-Basis und dann das Bilden der fotokatalytischen Schicht, wobei die untere Schicht davon in die Binderschicht eingebettet ist, umfasst.

5. Verfahren nach Anspruch 4, in welchem eine fotokatalytische Schicht mit Titanoxid gebildet wird, indem ein Titanalkoxid zu Titanhydroxid hydrolysiert wird und das letztere dehydratisiert und kondensiert wird.

6. Verfahren nach Anspruch 4, in welchem das hergestellte Material bei 400-500°C gebrannt wird.

## Revendications

1. Matériau polyfonctionnel ayant une fonction photocatalytique, comprenant une base et une couche photocatalytique ayant une fonction photocatalytique et placée sur une surface de ladite base par l'intermédiaire d'une couche de liant insérée entre celles-ci, ladite couche photocatalytique comprenant une couche superficielle tournée vers l'extérieur et une couche de dessous noyée dans ladite couche de liant, ladite base étant faite de verre à base de soude et ladite couche de liant étant de la silice.

2. Matériau selon la revendication 1, dans lequel la couche photocatalytique comprend des particules d'oxyde de titane.

3. Matériau selon la revendication 2, dans lequel les particules d'oxyde de titane portent en plus des particules d'un métal tel que le cuivre ou l'argent.

4. Procédé de fabrication d'un matériau polyfonctionnel selon la revendication 1, qui comprend la formation de la couche de liant à base de silice sur la surface de la base en verre à base de soude, puis la formation de la couche photocatalytique avec sa couche de dessous noyée dans la couche de liant.

5. Procédé selon la revendication 4, dans lequel la couche photocatalytique contenant de l'oxyde de titane est formée par hydrolyse d'un alkylate de titane en hydroxyde de titane, et par déshydratation et condensation de ce dernier.

6. Procédé selon la revendication 4, dans lequel le matériau produit est cuit à une température de 400 à 500°C.
